Europäisches Patentamt

European Patent Office

Office européen des brevets

(19)

(11) Numéro de publication : **0 296 017 B1**

(12) # FASCICULE DE BREVET EUROPEEN

(45) Date de publication du fascicule du brevet :
27.02.91 Bulletin 91/09

(51) Int. Cl.⁵ : **F16K 31/365, B60C 23/00**

(21) Numéro de dépôt : 88401369.9

(22) Date de dépôt : 06.06.88

(54) **Valve pneumatique pilotée perfectionnée pour la commande à distance du gonflage ou du dégonflage d'une capacité et installation en faisant application.**

(30) Priorité : 04.06.87 FR 8707772

(43) Date de publication de la demande :
21.12.88 Bulletin 88/51

(45) Mention de la délivrance du brevet :
27.02.91 Bulletin 91/09

(84) Etats contractants désignés :
DE FR GB IT

(56) Documents cités :
EP-A- 0 208 469
EP-A- 0 246 953
DE-A- 3 246 601
DE-A- 3 317 810

(56) Documents cités :
FR-A- 1 563 179
GB-A- 2 094 447
US-A- 2 634 781
US-A- 3 930 515
US-A- 4 598 750

(73) Titulaire : ETAT-FRANCAIS représenté par le
DELEGUE GENERAL POUR L'ARMEMENT
(DPAG)
Bureau des Brevets et Inventions de la
Délégation Générale pour l'Armement 26,
Boulevard Victor
F-75996 Paris Armées (FR)

(72) Inventeur : Boulicault, Jean-Michel
Noailly
F-42640 Germain Lespinasse (FR)

EP 0 296 017 B1

## Description

La présente invention concerne le domaine technique du contrôle à distance du gonflage ou du dégonflage d'une capacité à partir d'un fluide gazeux sous pression et elle vise, plus particulièrement, le contrôle à distance du gonflage du pneumatique d'une roue d'un véhicule automobile.

Dans le domaine d'application préféré ci-dessus, on sait qu'il est parfois utile de pouvoir contrôler à distance la pression de gonflage des pneumatiques des roues d'un véhicule, de manière à pouvoir adapter la portance de ces derniers en fonction de l'état du sol sur lequel le véhicule se déplace. Ceci est, en particulier, le cas des véhicules tous terrains qui doivent pouvoir progresser dans les meilleures conditions sur des sols durs, caillouteux, voire meubles se succédant, sans que le conducteur soit astreint à interrompre sa progression pour effectuer, de façon manuelle, lorsque le véhicule est à l'arrêt, une adaptation de la pression de gonflage des différents pneumatiques.

Cette application n'est évidemment donnée qu'à titre d'exemple, car, dans de nombreux autres domaines, il s'avère également utile, sinon nécessaire, de pouvoir adapter à distance la pression de gonflage d'une capacité quelconque.

Pour résoudre le problème ci-dessus, la technique antérieure n'offre que peu de solutions. L'une d'elles comprend, telle que par example décrite dans le brevet FR 1563179, une sorte de clapet capable, dans une position de repos, de fermer un circuit de circulation entre la capacité et une source de pression de fluide disponible.

Dans le cas où il est souhaité procéder au gonflage de la capacité, le clapet est commandé contre l'action d'un ressort de rappel, de manière à ouvrir le circuit de circulation.

Dans le cas où il est souhaité procéder à un dégonflage partiel de la capacité, un fluide sous pression est appliqué pour soulever le clapet et la source de distribution du fluide sous pression est isolée pour maintenir le clapet ouvert pendant le temps nécessaire pour produire une décompression lente, par l'intermédiaire d'un détendeur, du fluide initialement confiné dans la capacité.

Une telle installation nécessite un circuit de pilotage à distance particulièrement compliqué qui devient encore plus complexe, lorsqu'il est nécessaire de pouvoir piloter à distance une ou plusieurs capacités, comme cela est le cas dans l'application aux véhicules automobiles.

Outre cet inconvénient, il convient de noter que la phase de dégonflage implique un temps de transit important qui est établi par l'intermédiaire d'une installation complexe, pilotée à distance par un circuit de commande logique cher et fragile.

Dans l'application particulière au domaine technique visé, la technique antérieure ne propose pas une installation satisfaisante, étant donné que chaque capacité, constituée par une roue, doit, nécessairement, être isolée de l'installation de pilotage par un joint tournant qui est maintenu en pression pendant toute la durée de la phase de dégonflage.

Un tel joint tournant est donc sollicité de façon intense en rotation et en maintien de pression, de sorte que la ou les garnitures de friction, assurant la fonction d'étanchéité tournante, subissent des contraintes importantes et sont incapables de fournir un service fiable.

Un tel inconvénient est, bien entendu, rédhibitoire dans le cas d'application à des véhicules tous terrains devant être utilisés de façon intense.

Dans le cas d'application à de tels véhicules, la technique antérieure, impliquant une phase de dégonflage simultanée et relativement lente des roues, ne contribue pas non plus à rendre satisfaisante la technique de pilotage à distance de la pression de gonflage des pneumatiques.

On connaît aussi par le brevet FR 2598771, (publié le 20.11.1987) une valve pneumatique pilotée à distance et qui est constituée par deux corps de gonflage et de dégonflage délimitant deux cavités, dites respectivement d'admission et d'échappement, communiquant entre elles par une intercommunication qui forme dans les chambres deux sièges pour deux clapets asservis et qui est en relation, entre les sièges, avec un canal de liaison aboutissant à un puits de raccordement avec la capacité, la chambre d'admission étant en relation avec un puits de raccordement à une installation de pilotage, alors que la chambre d'échappement est en relation avec le milieu ambiant par des trous de mise à l'air libre.

Une telle valve donne satisfaction, mais peut être considérée comme chère de réalisation. En outre, son encombrement, quoique relatif, ne se prête pas bien à un montage intégré dans le cas d'application à une roue de véhicule.

La présente invention a pour objet des perfectionnements apportés à la valve du type ci-dessus, en vue de diminuer son prix de revient et de réduire notablement son encombrement, afin de rendre possible, en particulier dans le cas d'application aux pneumatiques de véhicules automobiles, le montage intégré dans la roue et, plus précisément, dans la jante.

Les perfectionnements selon la présente invention ont, également, pour objet un développement fonctionnel selon lequel une installation de pilotage à distance, incluant une valve conforme à l'invention, est, en outre, apte à fournir une mesure de la pression régnant effectivement dans la capacité.

Un autre objet de l'invention est de proposer des perfectionnements de réalisation permettant de réduire l'ensemble des éléments mobile à un seul organe intégré, d'un prix de revient particulièrement bas et susceptible d'être aisément monté et démonté sans nécessiter de réglage d'adaptation.

Pour atteindre les objectifs ci-dessus, selon la présente invention, la valve pneumatique pilotée, pour la commande à distance du gonflage et du dégonflage d'une capacité comprenant une cavité délimitée par les faces en regard de deux demi-corps assemblés, maintenant entre eux une membrane divisant la cavité en deux chambres dites de pilotage et d'échappement est caractérisée en ce que la chambre de pilotage, communique avec la chambre d'échappement par un perçage pratiqué dans le demi-corps, et prolongé extérieurement par une tubulure de raccordement à un circuit de mise en pression-dépression, le perçage communiquant également avec un puits, communiquant avec le circuit et débouchant dans la capacité, contrôlé par le clapet anti-retour dans le sens capacité-circuit et ménagé à partir de la face du second demi-corps tournée vers la capacité dans laquelle il s'ouvre, la chambre d'échappement communiquant avec un alésage débouchant dans la capacité et avec au moins un orifice d'échappement débouchant à l'extérieur de la capacité, un clapet asservi poussant la membrane en fermeture de l'alésage.

Diverses autres caractéristiques ressortent de la description faite ci-dessous en référence aux dessins annexés qui montrent, à titre d'exemples non limitatifs, des formes de réalisation de l'objet de l'invention.

La fig. 1 est une vue schématique illustrant un exemple d'application de l'objet de l'invention.

La fig. 2 est une coupe-élévation, à plus grande échelle, de l'objet de l'invention.

La fig. 3 est une vue en plan prise selon la ligne III-III de la fig. 2.

La fig. 4 est une coupe transversale prise selon la ligne IV-IV de la fig. 3.

La fig. 5 est une coupe partielle prise, à plus grande échelle, selon la ligne V-V de la fig. 3.

Les fig. 6 et 8 sont des vues schématiques illustrant différentes phases de mise en oeuvre de l'objet de l'invention.

La Fig. 9 est une coupe élévation montrant, à échelle différente, une variante de réalisation de l'objet de l'invention.

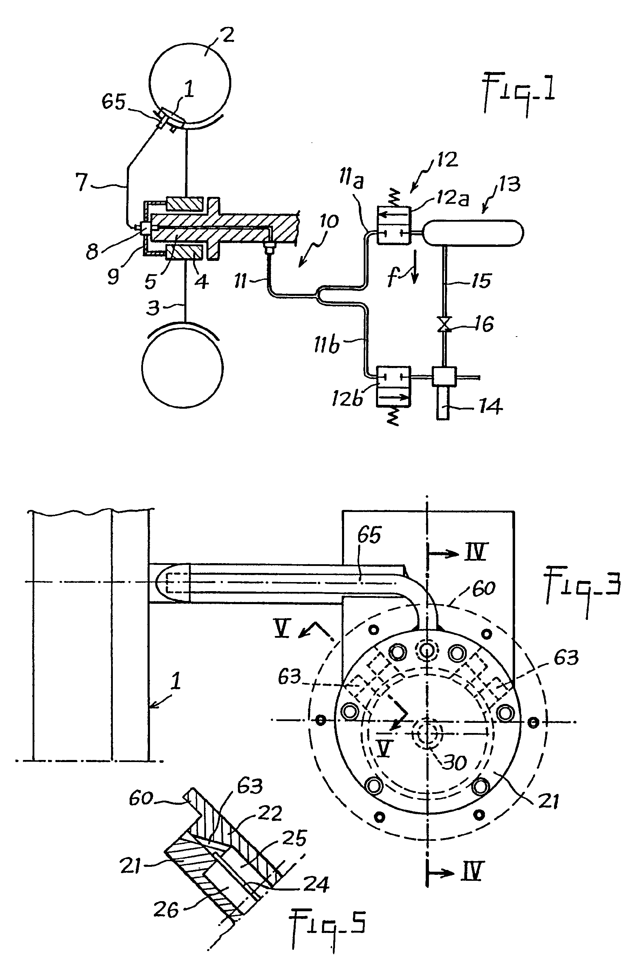

La fig. 1 illustre un exemple d'application préféré de la valve pneumatique pilotée selon l'invention. Dans cet exemple, la valve, désignée par la référence 1, est appliquée au contrôle de la pression du pneumatique 2 d'une roue 3 d'un véhicule automobile, non représenté. Selon l'illustration schématique, la roue 3 est montée par un moyeu 4 sur un axe de roulement ou fusée 5 pouvant correspondre, indifféremment, à un train moteur ou porteur et/ou directeur avant ou arrière d'un véhicule. Dans cette application, la valve 1 est adaptée sur la roue 3, de manière à être reliée par une canalisation 7 à un joint tournant 8 porté par une structure appropriée 9 en bout de l'axe 5. Le joint tournant 8 est raccordé à une installation de pilotage 10 comprenant une ligne 11 de circulation de fluide entre le joint tournant 8 et un ensemble distributeur 12, du type à tiroir.

L'ensemble 12 comprend, de préférence, deux distributeurs 12a et 12b, à deux positions, montés sur deux dérivations 11a et 11b menant, respectivement, à une source de distribution de fluide sous pression 13 ou à une source d'aspiration et à une source de mise en dépression 14. Selon le schéma illustré par la fig. 1, la source 13 est constituée par un accumulateur d'air comprimé ou par un compresseur. La source de mise en dépression 14 peut être constituée de nombreuses façons différentes, de manière à pouvoir mettre la ligne 11b en dépression relative. A titre d'exemple, la source 14 peut être constituée par une trompe à vide susceptible d'être alimentée par l'intermédiaire de la source 13 au moyen d'une canalisation 15 contrôlée par un robinet 16.

Il va de soi que l'installation décrite ci-dessus n'est donnée qu'à titre d'exemple, car des circuits plus complexes, à même d'assumer d'autres fonctions, peuvent également être prévus. Il peut, également, être envisagé de réaliser une telle installation pour le pilotage à distance de chaque roue individuellement d'un véhicule automobile ou d'un groupe de ces roues ou, encore, de la totalité de ces dernières.

La valve pneumatique pilotée, illustrée plus en détail aux fig. 2 à 5, est constituée par un corps 20 de gonflage et de dégonflage. Le corps 20 est constitué par deux demi-corps 21 et 22, en toute matière appropriée, assemblés de façon démontable ou non, face contre face et usinés pour délimiter ensemble une cavité 23. Les demi-corps 21 et 22 sont réalisés pour pincer, par leurs faces en regard délimitant la cavité 23, une membrane 24 déformable élastiquement divisant la cavité en deux chambres respectivement 25 et 26, dites de pilotage et d'échappement.

La chambre 25 contient un clapet 27 associé à la membrane 24 et asservi à l'action d'un organe élastique 28 choisi pour développer une force supérieure à celle devant régner dans la chambre 25. Le clapet 27 est ainsi poussé en permanence contre la membrane 24 pincée contre un siège 29 faisant saillie à partir du fond de la chambre 26. Le siège 29 borde l'orifice d'un alésage 30 pratiqué dans le demi-corps 21 selon une direction perpendiculaire au plan de la membrane, de manière à traverser entièrement le demi-corps et déboucher sur la face de ce dernier opposée au demi-corps 21.

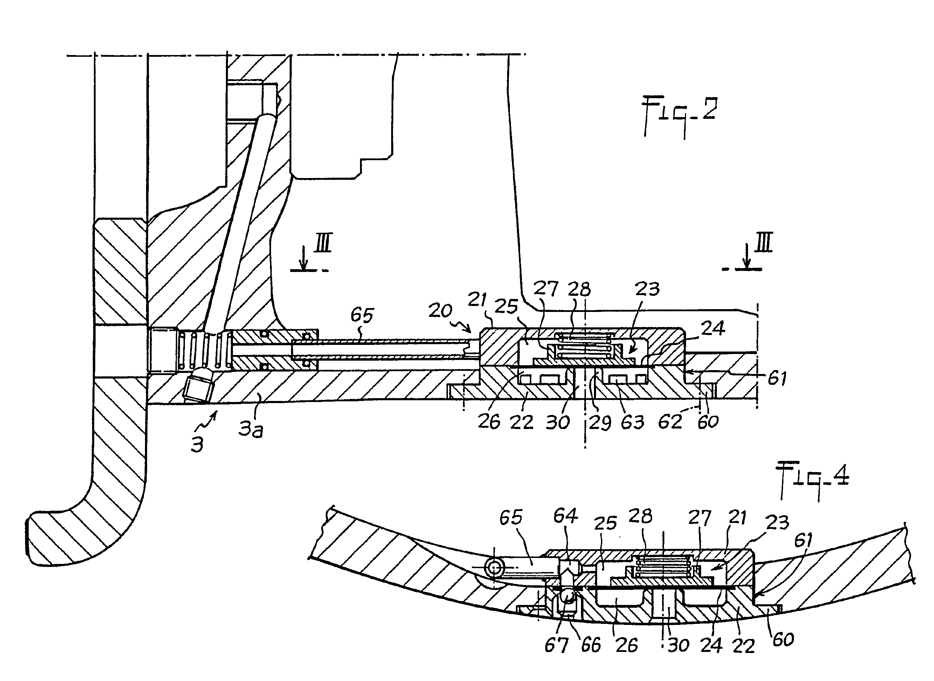

Les demi-corps 21 et 22 forment un ensemble compact et de faible épaisseur qui peut être monté sur la roue 3 en étant, de préférence, intégré dans l'épaisseur de la jante 3a de la roue 3. A cette fin, comme cela ressort des fig. 2 et 4, il est avantageux de réaliser le demi-corps 22 pour lui faire comporter une collerette 60 permettant l'emboîtement dans un logement complémentaire 61 de la jante sur laquelle la valve est fixée, par l'intermédiaire de vis 62. Le logement 61 est exécuté pour que la valve affleure la surface périphérique extérieure de la jante 3a, c'est-à-dire celle tournée vers l'intérieur du pneumatique 2. Le montage intégré de la valve est ainsi effectué pour que l'alésage 30 s'ouvre au niveau de la même face et soit ainsi en relation avec le volume interne du pneumatique, lequel constitue la capacité au sens de l'invention.

Les demi-corps 21 et 22 sont, également, usinés de manière à comporter au moins un conduit 63 (fig. 5) communiquant avec la chambre 26 et s'ouvrant à l'extérieur, de préférence à la périphérie ou sur la face du demi-corps 21 située hors de l'épaisseur de la jante 3a et ainsi dirigé vers l'extérieur par rapport à la capacité que représente le pneumatique 2.

Le demi-corps 21 comporte, dans son épaisseur, un perçage 64 communiquant avec la chambre 25 et pourvu d'une tubulure 65 de raccordement à la canalisation 7. Le perçage 64 communique, par ailleurs, avec un puits 66 pratiqué dans les demi-corps 21 et 22, selon une direction sensiblement parallèle à l'alésage 30 et dans une zone située hors des chambres 25 et 26. Le puits 66, qui débouche ainsi sur la face extérieure du demi-corps 22 et, par conséquent, dans la capacité, est contrôlé par un clapet anti-retour 67, du type à obturateur libre, s'opposant à une circulation de fluide depuis la capacité en direction du perçage 64.

Les fig. 1, 2 et 4 montrent un état de repos dans lequel les distributeurs 12a et 12b ferment les dérivations 11a et 11b isolant ainsi la valve pneumatique pilotée. Le clapet 27, poussé par le ressort 28, occupe la position fermée maintenant la membrane 24 en obturation du siège 29. Simultanément, la pression de fluide, régnant dans le pneumatique, maintient le clapet anti-retour 67 en position fermée du puits 66.

La valve pneumatique pilotée constitue ainsi une sorte d'obturateur isolant le pneumatique 2 du joint tournant 8, lui-même isolé par les distributeurs 12. Le joint tournant 8 est ainsi à même de travailler en rotation, sans être sollicité en pression, ce qui lui garantit un fonctionnement fiable dans le temps.

Lorsqu'il convient, pour une raison déterminée, de gonfler le pneumatique 2, le distributeur 12a est commandé en déplacement dans le sens de la flèche, de manière à établir la relation entre la source 13 et le perçage 64. Dans cette position, illustrée par la fig. 6, le fluide sous pression, délivré par la source 13, pénètre dans la chambre 25 dans laquelle son action sur le clapet 27 vient compléter l'action de l'organe élastique 28. Le clapet 27 est ainsi plus fortement encore appliqué sur le siège 29 pour obturer l'orifice correspondant de l'alésage 30.

La pression, régnant dans le perçage 64, provoque l'ouverture du clapet anti-retour 66 autorisant le passage du fluide sous pression dans le pneumatique 2.

Lorsque le seuil de gonflage est atteint, le distributeur 12a est commandé dans sa position de fermeture de la dérivation 11a, alors que, simultanément, le distributeur 12b est placé en position d'ouverture de la ligne 11b pour faire chuter la pression dans la ligne 11.

Il convient de noter que l'ouverture du distributeur 12b peut être commandée avec retard par rapport à la fermeture du distributeur 12a. De cette manière, il est possible, en branchant un manomètre 68 sur la ligne 11, d'apprécier la pression de gonflage régnant dans la capacité 2, puisque celle régnant dans la ligne 11 est alors, par équilibrage naturel, l'image exacte de cette dernière.

Au cours de la phase de gonflage, on constate que le joint tournant 8 travaille en rotation et en sollicitation de pression. Toutefois, une telle double fonction est assumée pendant un laps de temps relativement court, étant donné qu'une phase de mise en pression du pneumatique 2 en cours de roulement du véhicule s'établit, généralement, pendant un temps bref. Le joint tournant 8 peut ainsi travailler dans les meilleures conditions possibles, sans être sollicité en permanence en rotation et en étanchéité.

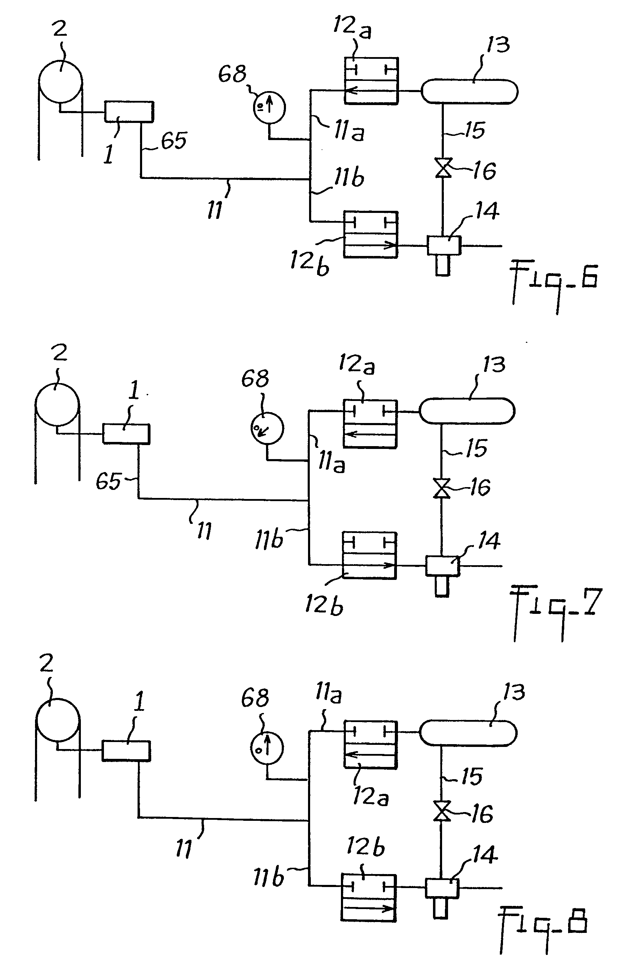

Lorsque le pneumatique 2 doit être dégonflé, le distributeur 12a est placé en position de fermeture de la dérivation 11a, alors que, simultanément, le distributeur 12b est placé en position d'ouverture de la dérivation 11b (fig. 7). La source 14 est mise en fonctionnement pour créer une dépression dans la ligne 11. Cette dépression accroît la fermeture du clapet anti-retour 67 et, simultanément, provoque l'ouverture du clapet 27 contre l'action du ressort 28. La membrane 24 est ainsi soulevée et permet le passage du fluide contenu dans le pneumatique par l'alésage 30, la chambre 26 et le ou les conduits 63 d'échappement vers l'extérieur.

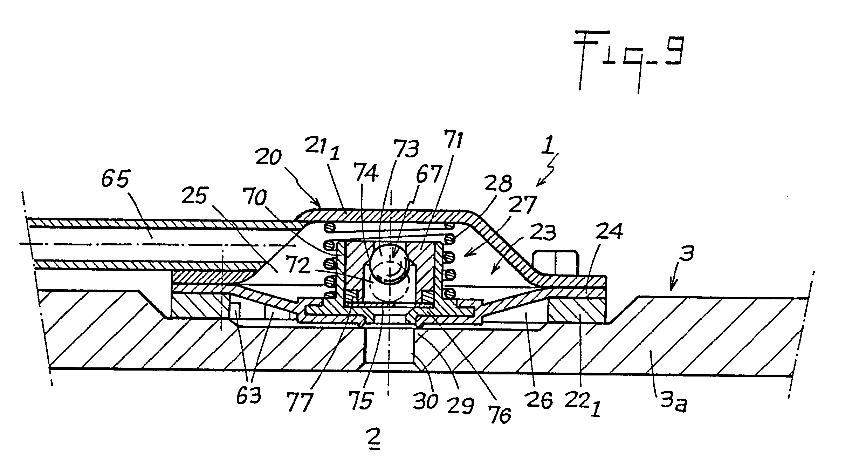

Lorsque le dégonflage du pneu a atteint la limite souhaitée, le distributeur 12b est ramené en position de fermeture. Dans cette position, illustrée par la fig. 8, il est possible de rouvrir un bref instant le distributeur 12a pour commander l'ouverture du clapet 67 et équilibrer les pressions entre le pneumatique et la ligne 11. De cette manière, le manomètre fournit une appréciation exacte de la nouvelle pression aprés dégonflage.

La fig. 9 montre une variante de réalisation selon laquelle, tout d'abord, le demi-corps 22 est constitué par une simple couronne 22₁ pourvue des rainures ou conduits 63 et destinée à délimiter la chambre 26 en étant appliquée et fixée, directement ou avec interposition d'un joint d'étanchéité, sur la paroi ou jante 3a de la capacité 2. La couronne 22₁ est associée à un demi-corps 21, de préférence, mais non exclusivement, réalisé par emboutissage et associé, par tout moyen convenable, à la tubulure 65. La couronne 22₁ et le demi-corps 21₁ délimitent ensemble la cavité 23 qui est divisée en deux chambres 25 et 26 par la membrane 24 qu'ils pincent.

Dans cette variante de réalisation, la membrane

24 est surmoulée sur un corps tubulaire 70 formant le clapet 27 en coopérant avec le ressort 28 qui entoure extérieurement le corps 70. La membrane 24 et le corps 70 forment ainsi un ensemble unitaire d'un faible coût pouvant être aisément stocké, manipulé, monté et démonté.

Selon cette variante, il est prévu, également, d'adapter, dans le corps 70 de clapet 27, le clapet anti-retour 67. A cette fin, le corps tubulaire 70 est pourvu d'une fourrure interne 71 possédant un alésage axial 72 occupé par une bille 73 formant obturateur. La bille 73 est libre de coulisser axialement entre un siège d'appui tronconique supérieur 74 présenté par l'alésage 72 et une grille ou analogue 75 interposée entre la base de la fourrure 71 et un rebord de butée 76 que comporte le corps tubulaire 70. La fourrure 71 peut être rapportée dans le corps de clapet 70 par tout moyen convenable tenant compte de la nature des matériaux en présence et, notamment, par collage ou sertissage.

La membrane 24, le clapet 27, la fourrure 71, la bille 73 et la grille 75 représentent ainsi un seul élément actif intégrant tous les composants de la valve qui se présente, de cette façon sous une structure particulièrement simple et peu encombrante.

Le fonctionnement de la valve selon la **fig. 9** est le même que celui décrit précédemment, car la fonction du clapet 27 reste inchangée. L'intégration du clapet 67 au clapet 27 ne modifie pas non plus la réaction de la bille 73 qui, sous l'effet de la pression régnant dans la capacité 2, est appliquée sur le siège 74 pour isoler cette dernière. Dans le cas où une dépression est établie dans la chambre 25, le clapet 27 soulève la membrane 24 mettant en communication l'alésage 30 avec la chambre 26 pour autoriser l'échappement du fluide de la capacité 2 vers l'extérieur par le conduit 63.

Dans ce qui précède, il a été indiqué que la valve selon l'invention permet de procéder à une mesure de pression de gonflage de la capacité 2. Il suffit, pour cela, d'isoler le circuit 10 après gonflage, de manière que la pression dans ce circuit équivale, par équilibre, la pression de la capacité 2. Ceci est vrai dans la mesure où la bille 73 reste ouverte un temps suffisamment long et qu'aucune fuite n'existe dans le circuit 10. Il peut être considéré que si une fuite existe, la bille 73 se trouvera immédiatement sollicitée en fermeture en interrompant la communication entre la capacité 2 et le circuit 10. La pression qui sera mesurée sera alors celle du circuit 10 et ne fournira pas une image réelle de celle de la capacité 2. Pour éviter cet inconvénient relatif, il est préconisé, selon la variante de la **fig. 9**, de réaliser le corps de clapet 70 et la fourrure 71 en un matériau magnétique et de décolleter extérieurement la base de la fourrure pour y placer une rondelle ou bague 77 en un matériau magnétique développant un champ transversal localisé, capable d'influencer la bille 73 réalisée en un matériau sensible au champ magnétique.

Sous l'effet de la pression régnant dans la capacité 2, la bille occupe toujours la position d'appui contre le siège 74 et rien ne se trouve changé dans la fonction d'isolement assurée. Par contre, lors du gonflage de la capacité 2, la bille est repoussée contre la grille 75 sur laquelle elle se trouve retenue par le champ magnétique tant que n'intervient pas, dans le circuit 10, une baisse de pression due au débit d'une fuite importante dans le circuit 10 et suffisante pour que la pression supérieure, régnant dans la capacité 2, devienne prépondérante pour vaincre l'attraction magnétique exercée par le champ de la bague 77. De cette manière, il devient possible d'effectuer, dans le circuit 10, une mesure de la pression de la capacité 2, même en présence de fuites d'ordre faible. La fonction de la bague 77 est donc, en quelque sorte, de réduire la sensibilité de la bille 73 en la rendant captive de sa position basse, tant qu'un ΔP important en faveur de la capacité 2 ne s'est pas établi par rapport au circuit 10.

Il convient de noter que les moyens selon l'invention sont à même d'assumer une fonction supplémentaire d'équilibrage de pression entre plusieurs capacités 2, dans la mesure où elles sont réunies par un circuit de gonflage commun. En effet, après gonflage, le maintien en ouverture des billes 73 établit une intercommunication temporaire assurant un équilibrage automatique de pression.

## Revendications

1. Valve pneumatique pilotée, pour la commande à distance du gonflage et du dégonflage d'une capacité (2) comprenant une cavité (23) délimitée par les faces en regard de deux demi-corps assemblés (21, 22), maintenant entre eux une membrane (24) divisant la cavité (23) en deux chambres (25, 26) dites de pilotage et d'échappement caractérisée en ce que la chambre de pilotage communique avec la chambre d'échappement par un perçage (64) pratiqué dans le demi-corps (21), et prolongé extérieurement par une tubulure (65) de raccordement à un circuit de mise en pression-dépression (11), le perçage (64) communiquant également avec un puits (66), communiquant avec le circuit (11) et débouchant dans la capacité (2), contrôlé par un clapet anti-retour (67) dans le sens capacité-circuit et ménagé à partir de la face du second demi-corps tournée vers la capacité dans laquelle il s'ouvre, la chambre d'échappement communiquant avec un alésage (30) débouchant dans la capacité et avec au moins un orifice d'échappement (63) débouchant à l'extérieur de la capacité, un clapet asservi (27) poussant la membrane (24) en fermeture de l'alésage (30).

2. Valve pneumatique pilotée selon la revendication 1, caractérisée en ce que le demi-corps (22), correspondant à la chambre d'échappement (26), forme une collerette (60) d'appui dans un logement complémentaire (61) présenté par la paroi de la capacité.

3. Valve pneumatique pilotée selon la revendication 1 ou 2 caractérisée en ce que le demi-corps (21), correspondant à la chambre de pilotage (25), comporte un perçage (64) communiquant avec la chambre et prolongé extérieurement par une tubulure (65) de raccordement au circuit de mise en pression-dépression (11), ledit perçage communiquant également avec un puits (66) contrôlé par le clapet anti-retour et ménagé à partir de la face du second demi-corps tournée vers la capacité dans laquelle il s'ouvre.

4. Valve pneumatique pilotée selon la revendication 1 caractérisée en ce que le clapet asservi (27) comprend un corps tubulaire sur une partie duquel la membrane (24) est surmoulée.

5. Valve pneumatique pilotée selon la revendication 4, caractérisée en ce que le clapet anti-retour (67) est incorporé au corps tubulaire du clapet asservi qui délimite, coaxialement à l'alésage (30), un alésage (72) contenant une bille libre (73) et définissant, pour cette dernière, un siège d'appui supérieur (74) et une grille de retenue inférieure (75).

6. Valve pneumatique pilotée selon la revendication 5, caractérisée en ce que le corps tubulaire (70) du clapet asservi est réalisé en une matière amagnétique et comporte, dans un plan proche de la grille, une bague magnétique (77) développant, dans l'alésage (70) un champ magnétique transversal localisé influençant la bille (73) réalisée en un matériau magnétique, lorsqu'elle occupe sa position d'appui sur la grille.

7. Installation de commande à distance du gonflage et du dégonflage d'une capacité, caractérisée en ce qu'elle comprend :
– une valve selon l'une des revendications 1 à 6,
– une ligne ou canalisation (11) établie entre la tubulure de raccordement de la chambre de pilotage et deux dérivations (11a, 11b) menant, respectivement, à une source de pression et à une source de dépression,
– un distributeur (12a, 12b) à commande sélective placé sur chaque dérivation,
– et un manomètre (68) disposé sur la ligne entre la valve et les dérivations.

8. Application de l'installation selon la revendication 7 au gonflage-dégonflage d'une roue d'un véhicule.

## Claims

1. Piloted pneumatic valve for the remote control of the inflation and deflation of a volume (2) including a cavity (23) delimited by the opposing faces of two assembled semibodies (21,22), securing between them a membrane (24) dividing the cavity (23) into two chambers (25, 26), one a pilot chamber and the other an exhaust chamber, wherein the pilot chamber communicates with the exhaust chamber through a hole (64) provided in the semibody (21) and extending externally by a tube (63) connecting it to the pressure-vacuum circuit (11), said hole (64) also communicating with a well (66), communicating with said pressure-vacuum circuit (11) and leading to the volume (2), controlled by a check valve (67) prohibiting flow in the cavity-circuit direction and fitted on the face of the second half-body, the face being turned toward the cavity into which the said check valve opens, whereas the escape chamber communicates with a bore (30) leading to the volume and with at least one escape orifice (63) leading outside the volume, while a slaved valve (27) presses the said membrane (24) against the said bore (30) to close it.

2. The piloted pneumatic valve of claim 1, wherein the said semibody (22) corresponding to the escape chamber (26) forms a bearing collar (60) in a complementary lodging (61) in the wall of the volume.

3. The piloted pneumatic valve of claim 1 or 2, wherein said semibody (21) corresponding to the pilot chamber (25) includes a hole (64) communicating with the chamber and extended externally by a tube (65) connecting it tho pressure-vacuum circuit (11), wherein said hole also communicates with a well (66) controlled by said check valve, and starting in the face of the second half-body, turned toward the volume, into which it opens.

4. The piloted pneumatic valve of claim 1, wherein said controlled valve (27) includes a tubular body over part of which said membrane (24) is molded.

5. The piloted pneumatic valve of claim 4, wherein said check valve (67) is incorporated in the said tubular body of the said controlled valve which delimits, coaxially with said bore (30), a bore (72) containing a free ball (73) and defining for the said ball, an upper bearing seat (74) and a lower retainer grid (75).

6. The piloted pneumatic valve of claim 5, wherein said tubular body (70) of said controlled valve is constructed of an magnetic material and includes, is a plane close to the grid, a magnetic ring (77) developing in said bore (70) a localized transverse magnetic field affecting said ball (73), which is made of a magnetic material, when it occupies the position pressed against the grid.

7. A system for controlling remotely the inflation and deflation of a volume, including :
– the valve of any of claims 1 to 6 ;
– a line or passage (11) between the connection tube of the pilot chamber and two branches leading (11a, 11b) respectively to a pressure source and a vacuum source ;
– a directional valve (12a, 12b) with selective control placed on each branch ;

– a pressure gauge (68) placed on the line between the valve and the branches.

8. Application of the system of claim 7 to the inflation and deflation of a vehicle wheel.

## Ansprüche

1. Gesteuertes Luftventil für das ferngesteuerte Auffüllen oder Entleeren eines Gefäßes (2) bestehend aus einem Hohlraum (23), der durch zwei gegenüberliegend zusammengebaute Halbschalen (21, 22) abgegrenzt ist, wobei diese Halbschalen eine Membrane (24) einklemmen, die den Hohlraum (23) in einer sogenannten Steuerkammer (25) und einer sogenannten Auslaßkammer (26) unterteilen, dadurch gekennzeichnet, daß die Steuerkammer mit dem Auslaßraum über eine in der Halbschale (21) angebrachte und nach außen über die Anschlußleitung (65) eines Auffüll- und Entleerkreises (11) verlängerte Bohrung (64) in Verbindung gesetzt wird, wobei die Bohrung (64) auch mit der Schacht (66) verbunden ist, die mit dem Kreis (11) in Verbindung steht, in das Gefäß (2) mündet, mit einer in Richtung Gefäß zum Versorgungskreis eingebauten Rückschlagklappe (67) versehen ist und in der gefäßseitigen Fläche der zweiten Halbschale gebohrt ist, wobei die Auslaßkammer über eine Bohrung (30) mit dem Gefäß und über mindestens eine Auslaßöffnung (63) mit der Außenluft in Verbindung steht und wobei die gesteuerte Klappe (27) die Membrane (24) in Schließstellung der Bohrung (30) drückt.

2. Gesteuertes Luftventil nach Anspruch 1, dadurch gekennzeichnet, daß die der Auslaßkammer (26) entsprechende Halbschale (22) mit einem Kragen (60) versehen ist, der sich in einer entsprechend eingearbeiteten Aufnahme (61) der Gefäßwand stützt.

3. Gesteuertes Luftventil nach Anspruch 1 oder 2, dadurch gekennzeichnet, daß die der Steuerkammer (25) entsprechende Halbschale (21) mit einer Bohrung (64) versehen ist, die ins Gefäß mündet und nach außen über die Anschlußleitung (65) des Auffüll- und Entleerkreises (11) verlängert ist, wobei die Bohrung (64) auch mit einer über ein Rückschlagventil gesteuerten und in der gefäßseitigen Fläche der zweiten Halbschale gebohrten Schacht (66) verbunden ist, die Sie mit dem Gefäß in Verbindung setzt.

4. Gesteuertes Luftventil nach Anspruch 1, dadurch gekennzeichnet, daß die gesteuerte Klappe (27) aus einem röhrenartigen Körper besteht, auf einem Teil dessen die Membrane (24) aufgegossen ist.

5. Gesteuertes Luftventil nach Anspruch 4, dadurch gekennzeichnet, daß die Rückschlagklappe (67) in den röhrenförmigen Körper der gesteuerten Klappe eingebaut ist, der koaxial mit der Bohrung (30) eine Bohrung (72) abgrenzt, wobei letztere Bohrung eine freie Kugel (73) enthält und für diese Kugel einen oberen Sitz (74) sowie ein unteres Rückhaltegitter (75) bestimmt.

6. Gesteuertes Luftventil nach Anspruch 5, dadurch gekennzeichnet, daß der röhrenförmige Körper (70) der gesteuerten Klappe aus einem, unmagnetischen Werkstoff hergestellt ist und in einer gitternahen Ebene einen magnetischen Ring (77) aufweist, der in der Bohrung (70) ein örtliches quergerichtetes Magnetfeld erzeugt, das die in einem magnetischen Werkstoff hergestellte Kugel (73) beeinflußt, wenn die Kugel in deren unteren Stützlage auf dem Gitter liegt.

7. Vorrichtung zum ferngesteuerten Auffüllen oder Entleeren eines Gefäßes, dadurch gekennzeichnet, daß sie aus.
   – einem Luftventil nach einem beliebigen Anspruch 1 bis 6,
   – einer zwischen dem Anschlußstutzen der Steuerkammer und zwei mit der Druckquelle bzw. der Unterdruckquelle (11a, 11b) in Verbindung stehenden Abzweigleitungen hergestellten Leitung (11),
   – einem auf jeder Abzweigleitung eingebauten, eigengesteuerten Wegeventil (12a, 12b) sowie
   – einem auf der Leitung zwischen dem Luftventil und der Abzweigleitungen angeordneten Manometer(68) besteht.

8. Anwendung der Vorrichtung nach Anspruch 7 dem Einblasen oder Ablassen von Luft aus dem Reifen eines Straßenfahrzeuges.

Fig-1

Fig-3

Fig-5

Fig. 2

Fig. 4

Fig-6

Fig-7

Fig-8

Fig. 9